# EUROPEAN PATENT APPLICATION

(11) **EP 1 056 231 A2**
(43) Date of publication of application: **29.11.2000**
(21) Application number: 00304540.8
(22) Date of filing: 26.05.2000
(51) Int. Cl.: H04B 10/158

(54) **Optical reception device, optical transmission system, and optical transmission method**

(30) Priority: 27.05.1999 JP 14776299
(71) Applicant: NEC CORPORATION, Tokyo (JP)
(72) Inventor: Koga, Tadashi, NEC Corporation, Tokyo (JP)
(74) Representative: Moir, Michael Christopher

(57) **Abstract**

An optical transmission system includes an optical transmission device, an optical reception device, and an optical fiber transmitting passage which connects these devices and in which an optical amplifier is provided. In the optical transmission device, a low-frequency signal is overlapped on an optical signal. The optical reception device includes a wavelength tunable optical filter, an optical/electric converter, a low-frequency signal detector, and a control section. The converter converts the light passing through the optical filter into an electric signal, and the detector detects the low-frequency signal in the electric signal. The control section receives the output of the detector and optimally controls the transmitted central wavelength of the filter.

## Description

### BACKGROUND OF THE INVENTION

### 1. Field of the Invention

The present invention relates to an optical reception device which receives a signal light highly sensitively, an optical transmission system, and an optical transmission method.

### 2. Description of the Related Prior Art

Recently, in a long-distance optical transmission system, an optical direct amplifier is used, which uses an erbium-doped-optical fiber as an optical repeater for the loss compensation of an optical fiber transmitting passage. In a conventional optical transmission system, a light that is sent out of a light source in the optical transmission device is modulated on the basis of an information signal by an optical modulator, and is amplified by an optical post-amplifier to be outputted. The outputted signal light is propagated in the optical fiber transmitting passage and gradually is attenuated. However, the optical repeater arranged in the above described optical fiber transmitting passage amplifies the signal light. The optical direct amplifier provided in this optical repeater adjusts pumping power to perform the optical auto-level-control, and keeps the level diagram of the signal light in the optical fiber transmitting passage at a certain determined value. The signal light is projected in the optical reception device from the optical fiber transmitting passage, and is amplified by an optical pre-amplifier. After this, the signal light passes through an optical band pass filter which passes light of that frequency band, and an optical/electric converter converts that transmitted signal light into an electric signal.

The output light of the optical direct amplifier used in such an optical transmission system includes noise of an amplified-spontaneous-emission light (hereafter referred to simply as ASE) generated from the amplifier other than the amplified signal light. This ASE noise is increased as the number of stages of the optical repeater of the optical fiber transmitting passage is increased, and further, as the optical direct amplifier is operated by a higher gain. In the case where the optical reception device receives a signal light and performs optical/electrical conversion to regenerate an information signal, the light receiving sensitivity becomes lower as the ASE noise becomes larger. Therefore, usually, the optical reception device has an optical band pass filter of the narrow band which passes only the wavelength band of the signal light to eliminate most of the ASE noise other than the wavelength band of the signal light, and it prevents the lowering of the light receiving sensitivity. As the transmitted band width of this optical band pass filter becomes narrower, the amount of the excessive ASE noise light to be eliminated becomes larger, so that the receiving sensitivity may be improved. However, in the optical band pass filter, the transmitted central wavelength is fixed to a determined wavelength, and therefore, any variation in the wavelength of the input signal light will cause part of or all of the signal light to be cut off by this filter. Therefore, the light receiving sensitivity of the optical reception device is suddenly lowered, or the reception becomes impossible. Accordingly, it is impossible to excessively narrow the transmitted band width of the optical band pass filter, when considering the stability of the wavelength of the light source or the like.

### SUMMARY OF THE INVENTION

Accordingly, it is an object of the present invention to provide an optical reception device, an optical transmission system, and an optical transmission method which has a high optical receiving characteristic, in the optical communication which uses an optical fiber transmitting passage where an optical direct amplifier is provided.

The optical reception device of the present invention comprises a wavelength tunable optical filter, an optical/electric converter in which transmitted light of the above described filter is projected, a low frequency signal detector which is connected to the above described optical/electric converter, and a control section which receives the output of the above described low frequency signal detector and controls the wavelength tunable optical filter. Another optical reception device comprises a branching device which branches transmitted light of the wavelength tunable optical filter and optical/electric converters which are connected to two output terminals of this branching device, respectively. To one optical/electric converter, a low frequency signal generator can be connected. The optical transmission system of the present invention comprises an optical transmission device and an optical reception device with the above described configuration. The optical transmission device comprises a light source, a modulator which modulates output light thereof on the basis of an information signal, and a low frequency signal generator which overlaps a low frequency signal on a signal light. The low frequency signal generator which overlaps a low frequency signal on a signal light can be connected to an optical post-amplifier. Or, it can directly be connected to an optical modulator. The optical transmission method comprises the steps of overlapping a low frequency signal on a signal light and sending out the signal light, introducing the above described received signal light into the wavelength tunable optical filter, detecting the above described low frequency signal contained in the transmitted light of the above described wavelength tunable optical filter, and controlling the transmitted central wavelength of the above described optical filter to make it agree with the wavelength of the signal light. In the step of detecting the low frequency signal, the transmitted central wavelength of the wavelength tunable optical filter is swept, and further, the transmitted light of the above described optical filter is converted into an electric signal, so that the low frequency signal contained in the above described electric signal can be detected. In the step of controlling the transmitted central wavelength of the optical filter, the transmitted central wavelength of the wavelength tunable optical filter is controlled so that receiving intensity of the wavelength of the signal light may be maximum. According to the above described invention, it is possible to receive the signal light highly sensitively.

### BRIEF DESCRIPTION OF THE DRAWINGS

The above and other objects, features and advantages of the present invention will become apparent from the following detailed description when taken with the accompanying drawing in which:
FIG. 1 is a block diagram of a conventional optical reception device and a conventional optical transmission system;
FIG. 2 is a block diagram of an optical reception device and an optical transmission system of the present invention;
FIG. 3 is a block diagram showing another example of the optical transmission device; and
FIG. 4 is a block diagram showing another example of the optical reception device.

### DETAILED DESCRIPTION OF THE PREFERRED EMBODIMENTS

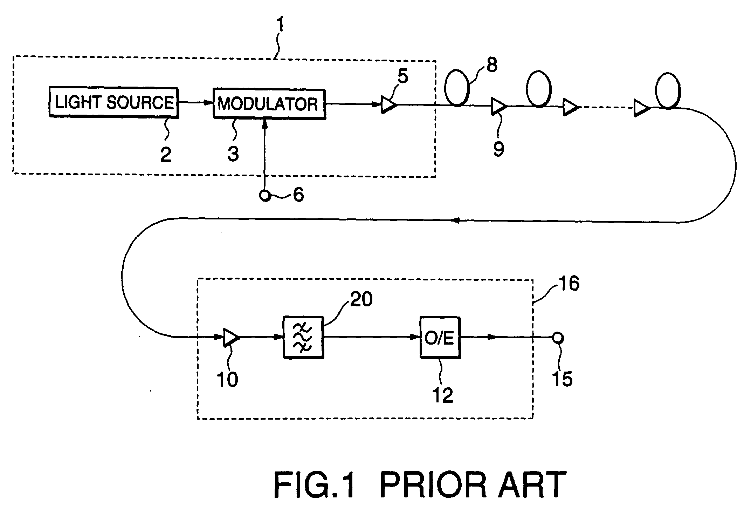

When referring to FIG. 1, a conventional optical transmission system comprises an optical transmission device 1, an optical reception device 16, and an optical fiber transmitting passage 8 which connects these devices. To the optical fiber 8, a plurality of optical amplifiers 9 are provided. The optical transmission device 1 comprises a light source 2, a modulator 3, and an optical post amplifier 5. The modulator 3 modulates light sent out of the light source 2 by an information signal inputted from an input terminal 6. The optical post-amplifier 5 amplifies the modulated signal light. The optical reception device 16 comprises an optical pre-amplifier 10, an optical band pass filter 20, an optical/electric converter (O/E) 12, and an output terminal 15. The optical pre-amplifier 10 amplifies incident signal light, and the optical band pass filter 20 passes light of a frequency band of the incident signal light.

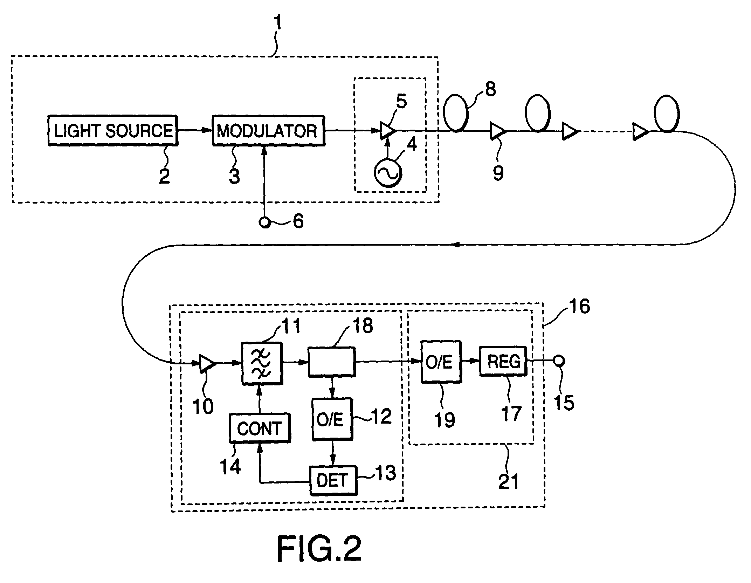

When referring to FIG. 2, an optical transmission system of one concrete example of the present invention comprises an optical transmission device 1, an optical reception device 16, and an optical fiber transmitting passage 8 which is provided between these devices, similarly to the system shown in FIG. 1. In the optical transmitting passage, optical direct amplifying repeaters 9 are connected successively in tandem at specific intervals to the optical fiber 8. The optical transmission device 1 comprises a light source 2 which outputs continuous oscillating light, a modulator 3 which modulates the output light of this light source 2, and an optical post-amplifier 5 which amplifies the signal light outputted from the modulator 3. The modulator 3 has an information signal input terminal 6, and the optical post-amplifier 5 is connected to a low frequency signal generator 4. The low frequency signal generator 4 can be arranged in the optical post-amplifier 5. For example, for the light source 2, an InGaAs/InP distribution feedback type semiconductor laser with a wavelength of 1.55 µm band can be used, and for the modulator 3, an optical intensity modulator using lithium niobate can be used. The optical reception device 16 comprises an optical pre-amplifier 10, a wavelength tunable optical filter 11, and an optical branching device 18, and these are connected successively in tandem. A first signal light outputted from the optical branching device 18 is converted by an optical/electric converter 19 into an electric signal, and the above described electric signal is outputted from an output terminal 15 through a signal regenerator 17. Furthermore, a second output light outputted from the optical branching device 18 is converted by an optical/electric converter 12 into an electric signal, and the above described electric signal is inputted into a low frequency signal detector 13. This low frequency signal detector 13 is connected to a control section 14 which controls the wavelength tunable optical filter 11. The wavelength tunable optical filter 11, the optical/electric converter 12, the low frequency signal detector 13, and the control section 14 or the like can be provided in the optical pre-amplifier 10. The wavelength tunable optical filter 11 is a well known filter using interference of a dielectric multilayer film. Or, the above described filter 11 can have a well known configuration using a surface acoustic wave on a lithium niobate substrate. For example, for the optical/electric converter 12, an InGaAs photodiode is used, and for the optical branching device 18, a fusion type optical coupler is used. The optical post-amplifier 5, the optical pre-amplifier 10, and the optical direct amplifying repeater 9 are optical direct amplifiers, and each of them comprises an erbium doped fiber which amplifies the optical signal and an excitation light source made of a Fabry-Perot type semiconductor laser of InGaAs/InP with a wavelength of 1.48 µm band which excites this fiber. For the transmitting passage optical fiber 8, a pure silica-core-fiber is used, which has a mode field diameter (MDF) of 10 µm (λ=1558.5 nm), a wavelength dispersion value of +20 ps/nm/km (λ=1558.5 nm), and a loss of 0.18 dB/km.

The optical reception device 16 comprises not a fixed optical band pass filter but a wavelength tunable optical filter 11 which can change the transmitted wave by a control signal. This wavelength tunable optical filter 11 can be controlled so that the wavelength of the inputted signal light and the transmitted central wavelength of the filter may agree with each other at all times. That is, according to the control section 14 of the optical reception device 16, the wavelength tunable optical filter 11 sweeps predetermined wavelength range to detect a low frequency signal overlapped on the signal light, so that the wavelength of the signal light can be positioned within the transmitted wavelength band of the wavelength tunable optical filter 11 at all times. Therefore, even if the width of the transmitted band of the filter 11 is narrowed, it does not occur for the wavelength band of the signal light to be cut off by the filter 11 because of the variation of the wavelength of the signal light. Therefore, in the case of the wavelength tunable optical filter 11, the width of the transmitted band can further be narrowed when compared with a conventional fixed optical band pass filter, and therefore, the receiving characteristic thereof is largely improved.

The operation of the optical reception device and the optical transmission system shown in FIG. 2 will be described. The light source 2 outputs continuous oscillating light. The modulator 3 modulates this continuous oscillating light according to the information signal inputted from the information signal input terminal 6. The optical post-amplifier 5 directly amplifies the modulated signal light. The signal light is simultaneously AM-modulated by the low frequency signal from the low frequency signal generator 4, and it is sent out to the optical transmitting passage 8. The degree of modulation of the AM-modulation is set at a degree of several % for restraining the penalty to the modulation efficiency of the optical direct amplifier and the main signal small. At this moment, the low frequency signal can be set, for example, at about 4.8 kHz. The signal light gradually attenuates in the optical fiber transmitting passage, but the optical direct amplifying repeater 9 compensates the loss power. However, to the signal light, ASE noise generated from the optical direct amplifier is added. The optical pre-amplifier 10 of the optical reception device 16 optically directly amplifies the incident signal light. The amplified signal light is put into the wavelength tunable optical filter 11 together with the ASE noise. The filter 11 passes the light of the initially set transmitted wavelength band. The optical/electric converter 12 converts that transmitted light into an electric signal. At this moment, in the case where signal light is included in the transmitted light, the low frequency signal detector 13 detects a low frequency signal of 4.8 kHz modulating the signal light. The control section 14 receives a notice of detecting a low frequency signal from the low frequency signal detector 13, and it optimally controls the transmitted central wavelength of the wavelength tunable optical filter 11 so that this low frequency signal may be detected at all times. However, in the case where the wavelength band of the signal light is different from the initially set transmitted wavelength band of the wavelength tunable optical filter 11, the low frequency signal detector 13 cannot detect the above described low frequency signal. At this moment, the low frequency signal detector 13 notices the control section 14 of the fact that the low frequency signal cannot be detected. Receiving this, the control section 14 sweeps the transmitted central wavelength of the wavelength tunable optical filter 11. When the low frequency signal detector 13 detects a low frequency signal, the control section 14 stops sweeping of the transmitted central wavelength therein. Then, the control section 14 optimally controls the transmitted central wavelength of the wavelength variable optical filter 11 so that a low frequency signal may be detected at all times. In the optimum control, the control can be performed so that for example, the power of the transmitted light of the filter 11 maybe maximum. As a result of this, the signal light in which the ASE noise is removed by the wavelength tunable optical filter 11 is converted into an electric signal by the optical/electric converter 19, and it is shaped in the wave form by the signal regenerator 17, and it is outputted from the information signal output terminal 15.

In the optical reception device using a conventional fixed optical filter shown in FIG. 1, even if the wavelength stability of the semiconductor laser of the light source 2 is ±0.5 nm or less, it is necessary that the width of the transmitted band of the fixed optical filter is about 1 nm. For example, in the case of a bit rate of the information signal of 2.5 Gb/s, the minimum receiving sensitivity at which the bit error rate is 1×10⁻¹¹ or less is about -40.8 dBm. However, since the optical reception device using the wavelength variable optical filter automatically follows the transmitted central wavelength of the filter even if the wavelength of the light source fluctuates, the width of the transmitted band can be about 0.1 nm. At this moment, the similar minimum receiving sensitivity is -42.7 dBm, and the characteristic can be improved by about 2 dB when compared with that in the case of the fixed optical filter.

In the present invention, modulation of a signal light by a low frequency signal can be performed in the optical post-amplifier 5, and therefore, there is no limitation based on the form or wavelength of the optical transmission device. Similarly, since detection of a low frequency signal is performed in the optical pre-amplifier 10, the optical reception device requires no regenerator circuit which processes an information signal at a high speed.

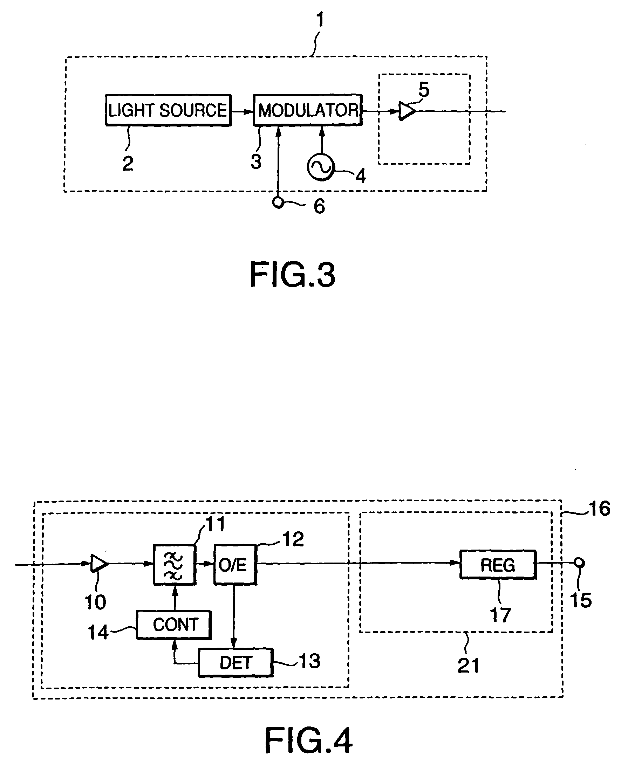

FIG. 3 shows another example of the optical transmission device 1. The modulator 3 has an information signal input terminal 6, and it is connected to the low frequency signal generator 4. The modulator 3 modulates continuous oscillating light outputted from the light source 2 by the information signal, and at the same time, it overlaps the low frequency signal on the signal light.

FIG. 4 shows another concrete example of the optical reception device 16. This optical reception device 16 has no optical branching device 18, and light passing through the wavelength tunable optical filter 11 is directly put in the optical/electric converter 12. The optical/electric converter 12 converts incident light into an electric signal, and it directly sends out the signal to the signal regenerator 17 and the low frequency signal detector 13.

In the optical transmission system of the present invention, a semiconductor laser amplifier can be used as a direct amplifier. For the light source, a gas laser or the like can be used, and further, light with a wavelength other than the above described wavelength can also be used. As the wavelength variable optical filter, a filter using a fiber Fabry-Perot interferometer or a well known filter using optical grating can be used besides the above described filter. The present invention can easily be expanded to a wavelength division multiplex optical transmission system in which a plurality of signal light wavelengths are multiplexed. In this case, mutually different low frequency modulated frequencies are overlapped on the respective signal lights.

As mentioned above, in the present invention, the wavelength variable optical filter is controlled so that the optical reception device can receive a low frequency signal overlapped on the signal light by the optical transmission device at all times. Consequently, the transmitted wavelength band of the above described optical filter can be narrowed, and therefore, the influence of the ASE noise can be restrained so that the optical signal can be received highly sensitively.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

An optical transmission system includes an optical transmission device, an optical reception device, and an optical fiber transmitting passage which connects these devices and in which an optical amplifier is provided. In the optical transmission device, a low-frequency signal is overlapped on an optical signal. The optical reception device includes a wavelength tunable optical filter, an optical/electric converter, a low-frequency signal detector, and a control section. The converter converts the light passing through the optical filter into an electric signal, and the detector detects the low-frequency signal in the electric signal. The control section receives the output of the detector and optimally controls the transmitted central wavelength of the filter.

## Claims

1. An optical reception device which receives a signal light, comprising:
a wavelength-tunable optical filter;
an optical/electric converter in which transmitted light of said optical filter is projected;
a low-frequency signal detector which is connected to said optical/electric converter; and,
a control section which receives an output of said low-frequency signal detector and controls said wavelength-tunable optical filter.

2. The optical reception device according to claim 1, further comprising a branching device which branches the transmitted light of said optical filter,
wherein optical/electric converters are connected to two output terminals of said branching device, respectively.

3. The optical reception device according to claim 2, wherein a low-frequency signal detector is connected to one of said two optical/electric converters.

4. An optical transmission system which includes an optical transmission device and includes the optical reception device of claim 1, wherein the optical transmission device comprises:
a light source;
a modulator which modulates output light of the light source on the basis of an information signal; and,
a low-frequency signal generator which overlaps a low-frequency signal on a signal light.

5. The optical transmission system according to claim 4, wherein said optical transmission device comprises an optical post-amplifier which directly amplifies signal light; and,
a low-frequency signal generator is connected to said optical post-amplifier.

6. The optical transmission system according to claim 4, wherein said low-frequency signal generator is directly connected to said optical modulator.

7. The optical transmission system according to claim 4, wherein:
said optical reception device comprises a branching device which branches transmitted light of said optical filter; and,
optical/electric converters are connected to two output terminals of said branching device, respectively.

8. The optical transmission system according to claim 4, wherein a low-frequency signal detector is connected to one of said two optical/electric converters.

9. An optical transmission method, comprising:
overlapping a low-frequency signal on a signal light and sending out the signal light;
introducing said received signal light into a wavelength-variable optical filter;
detecting said low-frequency signal contained in transmitted light of said wavelength-variable optical filter; and,
controlling a transmitted central wavelength of said optical filter to make the transmitted central wavelength agree with a wavelength of the signal light.

10. The optical transmission method according to claim 9, wherein the transmitted central wavelength of said wavelength-tunable optical filter is swept in the step of detecting said low-frequency signal.

11. The optical transmission method according to claim 9, wherein the transmitted light of said wavelength-tunable optical filter is converted into an electric signal and the low-frequency signal contained in said electric signal is detected in the step of detecting said low-frequency signal.

12. The optical transmission method according to claim 9, wherein the transmitted central wavelength of the wavelength-tunable optical filter is controlled so that receiving intensity of the wavelength of the signal light may be maximum, in the step of controlling the transmitted central wavelength of said optical filter.
